# NEUE EUROPÄISCHE PATENTSCHRIFT

(11) **EP 1 910 148 B2**
(45) Veröffentlichungstag und Bekanntmachung des Hinweises auf die Entscheidung über den Einspruch: **10.06.2015**
(45) Hinweis auf die Patenterteilung: 29.12.2010
(21) Anmeldenummer: 06762687.9
(22) Anmeldetag: 19.07.2006
(51) Int. Cl.: B62D 1/184

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION REGLABLE DESTINEE A UN VEHICULE

(30) Priorität: 22.07.2005 DE 102005034952
(43) Veröffentlichungstag der Anmeldung: 16.04.2008
(73) Patentinhaber: ThyssenKrupp Presta Aktiengesellschaft, 9492 Eschen (LI)
(72) Erfinder: GALEHR, Robert, FL-9493 Mauren (LI); SCHOLTEN, Michael, 6723 Blons (AT)
(74) Vertreter: Albrecht, Rainer Harald
(86) Internationale Anmeldenummer: PCT/EP2006/007086
(87) Internationale Veröffentlichungsnummer: WO 2007/009760

(56) Entgegenhaltungen:
- EP-A- 1 468 895
- EP-A2- 1 245 472
- WO-A-2004/085225
- WO-A1-98/39195
- FR-A- 2 714 647
- FR-A- 2 778 704
- US-A1- 2003 025 315
- US-B1- 6 357 317
- US-B1- 6 357 318
- US-B2- 6 848 716

## Beschreibung

Die Erfindung betrifft eine verstellbare Lenksäule für ein Kraftfahrzeug, umfassend eine Lenkspindel, die drehbar in einem Stellteil gelagert ist, ein Halteteil und eine Fixiereinrichtung, in deren geöffnetem Zustand das Stellteil gegenüber dem Halteteil zur Einstellung der Position der Lenksäule mindestens in Axialrichtung der Lenkspindel verstellbar ist und in deren geschlossenem Zustand das Stellteil von der Fixiereinrichtung gegenüber dem Halteteil festgestellt ist.

Verstellbare Lenksäulen dienen der Erhöhung des Komforts des Fahrers und können in ihrer Längen-, Höhen- und/oder Winkelposition verändert werden, um so die Position des Steuerrades auf die Sitzposition des Fahrers anpassen zu können. Hierzu verfügen diese Lenksäulen über ein Stellteil, dessen Lage in Bezug auf ein Halteteil veränderbar ist und mit einer Fixiereinrichtung oder einem Klemmsystem festlegbar ist.

Für verstellbare Lenksäulen stellt sich das Problem, dass die Fixiereinrichtung leichtgängig und mit geringen Wegen der Betätigungsglieder geöffnet und geschlossen werden können soll, nur wenig Bauraum einnehmen soll und gleichzeitig möglichst große Widerstände gegen ein unbeabsichtigtes Verstellen des Stellteils gegenüber dem Halteteil aufbringen soll. Insbesondere im Crashfall soll genügend Rückhaltekraft zum Öffnen des Airbags zur Verfügung gestellt werden und/oder die Energie beim Aufprall des Fahrers auf das Lenkrad kontrolliert abgebaut werden. Dieser Energieabbau kann dabei entweder im Klemmsystem selbst oder in separaten Einrichtungen, die dann üblicherweise wirkungsmässig zwischen Halteteil und Karosserie angeordnet sind, erfolgen.

In der GB 2297607 A wird eine Fixiereinrichtung vorgeschlagen, bei der am Halteteil links und rechts zwei Seitenwangen ausgebildet sind, zwischen denen das Stellteil eingeklemmt ist. Durch die Verstellung einer Klemmachse werden die Seitenwangen für das Schliessen der Fixiereinrichtung zusammengedrückt, sodass eine entsprechende Haltekraft aufgebracht ist.

Der Nachteil dieser Anordnung besteht in den insgesamt relativ geringen Haltekräften und der erforderlichen Vergrösserung der linken und rechten Seitenflächen am Stellteil, die zudem durch ein zusätzliches Blechbiegeteil, das am Stellteil angeschweißt ist, realisiert ist.

Die Anzahl der Einzelteile und Bearbeitungsschritte ist dementsprechend hoch. Die Abstützung des Stellteils gegen eine Drehung um die Klemmachse ist nicht sehr steif.

In der DE 3308788 A1 wird eine Fixiereinrichtung für das Mantelrohr einer Fahrzeuglenksäule, bestehend aus einer U-förmigen Stütze mit zwei nach unten gerichteten Schenkeln, einer das Mantelrohr zum Teil umgebenden axial geschlitzten nachgiebigen Büchse und einem U-förmigen Klemmstück aus Metallblech zwischen der Büchse und den Schenkeln der Stütze gezeigt. Dabei ist das Mantelrohr - das Stellteil - der Lenksäule in Bezug auf die U-förmige Stütze - dem Halteteil - in seiner Längs- und Winkellage verstellbar. Durch ein Spannzeug kann die Fixiereinrichtung geöffnet und geschlossen werden und somit die Lage des Stellteils gegenüber dem Halteteil veränderbar oder fixiert sein.

Nachteil der in diesem Stand der Technik vorgestellten Lösung ist die geringe Steifigkeit des gesamten Aufbaus. Weiter müssen zur Erreichung ausreichend großer Haltekräfte sehr hohe Betätigungskräfte und/oder Betätigungswege am Handgriff bzw. Stellhebel zum Öffnen und Schließen der Fixiereinrichtung ausgeübt werden.

In der FR 2 714 647 A1 und in der WO 2004/085225 A1 werden verstellbare Lenksäulen beschrieben, die sowohl hinsichtlich ihrer Länge als auch hinsichtlich ihres Neigungswinkels verstellbar sind. Bei der in der WO 2004/085225 A1 beschriebenen Konstruktion ist die Lenksäule über zwei separate, voneinander beabstandet angeordnete Halteklammern mit der Fahrzeugkarosserie verbunden. Eine der beiden Halteklammern dient dabei auch als Aufnahme der Schwenkachse, um welche die Lenksäule verschwenkt werden kann. Nachteilig bei dieser Konstruktion ist, dass zwei voneinander getrennte Bauteile, nämlich die separaten Halteklammern 2 und 4, erforderlich sind, um die Lenksäule an der Fahrzeugkarosserie zu befestigen, und dass diese Halteklammern dazu an zwei separaten, voneinander beabstandeten Befestigungspunkten mit der Fahrzeugkarosserie verbunden werden müssen.

Die Aufgabe der Erfindung besteht darin, eine Fixiereinrichtung für eine in der Länge, das heißt in Axialrichtung der Lenkspindel, und hinsichtlich ihres Neigungswinkels verstellbare Lenksäule bereitzustellen; die im geschlossenen Zustand zumindest in diese Axialrichtung hohe Haltekräfte gegen eine Verstellung des Stellteils gegenüber dem Halteteil aufbringt, wobei die Betätigungswege und Betätigungskräfte am Stellhebel den Komforterfordernissen des Fahrers entsprechen.

Die Aufgabe der Erfindung wird durch eine Lenksäule entsprechend den Merkmalen des Anspruchs 1 gelöst. Vorteilhafte und zweckmäßige Ausgestaltungen der Erfindung sind Gegenstand der Unteransprüche.

Erfindungsgemäß wird hierzu eine Lenksäule der eingangs genannten Art vorgeschlagen, bei der die von der Lenkspindel weggerichtete Oberfläche des Stellteils in Umfangsrichtung mehrere erste Flächenabschnitte aufweist, die zur Lenkspindel hin gerichtete Oberfläche des Halteteils, die das Stellteil zumindest teilweise umschließt, zweite Flächenabschnitte aufweist, wobei sich die ersten und zweiten Flächenabschnitte in Richtung der Achse der Lenkspindel erstrecken und wobei zur Fixierung des Stellteils mindestens drei Paare von ersten und zweiten Flächenabschnitten zumindest teilweise in kraft- oder kraft- und formschlüssigen Kontakt bringbar sind. Durch diesen Kontakt ist das Stellteil mit dem Halteteil kraftschlüssig gegen eine Verschiebung in Richtung der Achse der Lenkspindel gesichert. Der Kontakt bewirkt bereits bei geringen Normalkräften bzw. Flächenpressungen eine hohe Steifigkeit der Anordnung und hohe Haltekräfte gegen eine Verschiebung des Stellteils gegenüber dem Halteteil. Für den Fall, dass die Fixiereinrichtung geöffnet ist, dienen die Flächen als Führungen, sodass das Stellteil gut gegenüber dem Halteteil vom Fahrer verstellt werden kann.

Da das Halteteil in der Halteklammer um eine Schwenkachse drehbar gelagert ist, kann die Lenksäule in der Winkellage verschwenkt werden. Hierzu sind in einem Abstand von der Schwenkachse Langlöcher vorgesehen, die in Seitenwangen der Halteklammer vorgesehen sind und von der Fixiereinrichtung, die z.B. einen Spannbolzen umfasst, durchgriffen werden. Dabei können die Langlöcher sowohl gerade verlaufen als auch eine gebogene Kreisabschnittsform aufweisen, deren Mittelpunkt auf der Schwenkachse liegt.

Bevorzugt sind die Schwenkachse an dem einen Ende und die Langlöcher sowie die Fixiereinrichtung an dem anderen Ende der Halteklammer (in Längsrichtung der Lenkspindel gesehen) angeordnet. Dadurch können bei einer bestimmten Fixierkraft der Fixiereinrichtung besonders hohe Kräfte an dem dem Lenkrad zugewandten Ende der Lenkspindel abgestützt werden.

Das Halteteil weist eine Öffnung entlang seiner Längsachse auf, die beim Schließen der Fixiereinrichtung verkleinerbar ist, so dass die ersten und zweiten Flächenabschnitte an Stellteil bzw. Halteteil mit einer zur Fixierung des Stellteils erforderlichen Flächenpressung miteinander in Kontakt bringbar sind.

Der erfindungsgemäße Lösungsansatz besteht darin, durch jeweils zwei möglichst große Flächenkontakte am Umfang des Stellteils möglichst hohe Reibkräfte zu erzeugen, die zu hohen Verschiebekräften im geschlossenen Zustand der Fixiereinrichtung führen und gleichzeitig die Führung im geöffneten Zustand der Fixiereinrichtung zu gewährleisten. Weiter soll eine Abstützung in möglichst vielen Raumrichtungen erfolgen, um die Steifigkeit zu erhöhen und die Schwingungsneigung zu verringern. Über die Auslegung der Flächenpaarungen und entsprechender Flächenpressungen können die Verschiebekräfte und die Haltekräfte eingestellt werden. Es werden deshalb ebene Flächenabschnitte vorgesehen.

Ein derartiges Stellteil und ein derartiges Halteteil kann in einfacher Weise durch eine Blechbiege- und -stanzoperation hergestellt werden und dabei werden die Flächenabschnitte nahezu eben ausgebildet. Da bei Biege- und Stanzoperationen der Werkstoff nur wenig Dehnung erfährt, gibt es fertigungsbedingte Einschränkungen in der Präzision der Ebenheit der so geformten Flächen. Wie Versuche gezeigt haben, genügen aber diese Genauigkeiten, um ausreichend hohe Widerstandskräfte gegen eine Verschiebung des Stellteils gegenüber dem Halteteil zu erreichen.

Zur Senkung der Anforderungen an die Genauigkeit der Herstellung der einzelnen Flächenabschnitte ist in einer Weiterbildung der Erfindung vorgesehen, dass mindestens einer der ersten und/oder zweiten Flächenabschnitte zur Ausbildung von diskreten Druckpunkten mindestens eine leistenartige Erhöhung aufweist. In diesem Fall erfolgt die Kraftübertragung über den Kontakt, der sich zwischen der leistenartigen Erhöhung und dem gegenüber liegenden Flächenabschnitt bildet. Dadurch sind die Anforderungen an die Herstellgenauigkeit gesenkt. Geringe Passungenauigkeiten können so durch elastische Rückfederungen in den Flächenabschnitten ausgeglichen werden. Zur sicheren Führung und Verhinderung des Verkantens ist dabei bevorzugt mindestens eine leistenartige Erhöhung in Richtung der Achse der Lenkspindel ausgerichtet. Zur Erhöhung der Steifigkeit wird, bevorzugt an einem anderen Flächenabschnitt, zumindest eine leistenartige Erhöhung vorgesehen, die senkrecht zur Achse der Lenkspindel ausgerichtet ist. Weiter bevorzugt werden zwei derartige Erhöhungen in Verstellrichtung hintereinander liegend angeordnet.

Alternativ oder auch in Kombination zum Einsatz leistenartiger Erhöhungen werden in einer vorteilhaften Weiterbildung der Erfindung die Flächenkontakte noch durch eine leichte Bombierung der nahezu eben ausgebildeten Flächen erhöht, sodass beim Schließen der Fixiereinrichtung zunächst die konvex aus der Oberfläche herausstehenden Teilbereiche der ersten und/oder zweiten Flächenabschnitte in Kontakt kommen und sich während des Vorgangs des Schließens unter elastischer Umformung ein großflächiger Flächenkontakt ausbildet. Dabei werden die Eigenspannungen günstig erhöht, sodass die Steifigkeit der Lenksäule noch weiter erhöht wird. Konvexitäten, das heißt Überhöhungen der Flächenmitte in Bezug zum Rand der nahezu ebenen Fläche, von bis zu 0,05 mm haben sich als sinnvoll und nützlich erwiesen. Wenn die Konvexitäten zu groß sind, kann sich der großflächige Kontakt nicht mehr durch einfache elastische Verformung herstellen, sodass die Steifigkeit der Anordnung wieder sinkt.

Im Weiteren soll die Erfindung anhand schematischer Figuren erläutert werden. Es zeigen:

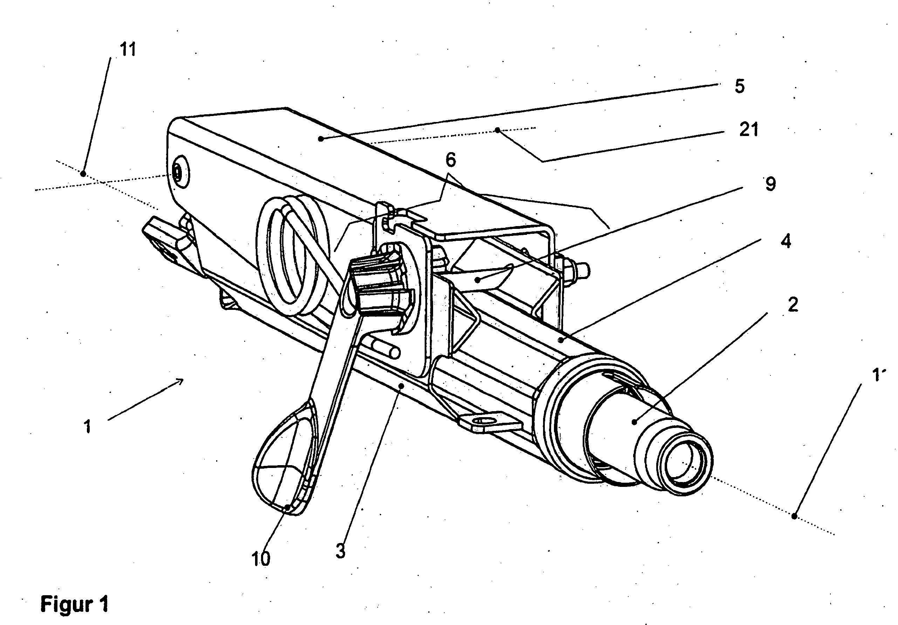

- Figur 1:: eine Ausführungsform der erfindungsgemäßen Lenksäule,
- Figur 2: eine Ausführungsform der erfindungsgemäßen Lenksäule in ausein- andergezogener Darstellung der Einzelteile,
- Figur 3:: einen Schnitt durch die Fixiereinrichtung in geöffnetem Zustand,
- Figur 4:: einen Schnitt durch die Fixiereinrichtung in geschlossenem Zustand,
- Figur 5:: eine alternative Ausführungsform des Halte- und Stellteils,
- Figur 6:: einen Teilschnitt durch die Fixiereinrichtung in einer alternativen Aus- führungsform in geöffnetem Zustand.

In allen Figuren sind zur besseren Übersicht Teile der Lenkwelle und die Befestigung am Fahrzeug weggelassen, da sie nicht wesentlich für die Erfindung sind.

Die Lenkspindel 2 ist im Stellteil 4 drehbar um die Achse 11 gelagert und wird vom nicht gezeigten Steuerrad vom Fahrer betätigt. Das Stellteil 4 ist im Halteteil 3 axial verschiebbar geführt. Das Halteteil 3 ist in der Halteklammer 5 um die Schwenkachse 21 drehbar gelagert. Mit der Fixiereinrichtung 6, die hier als Klemmsystem ausgebildet ist, umfassend einen Stellhebel 10, einen Spannbolzen 9 sowie einen Gegenhalter 20, eine Kulissenscheibe 19 und einen Nocken 18, werden die Halteklammer 5, das Halteteil 3 und das Stellteil 4 in ihrer Bewegung gegeneinander fixiert bzw. freigegeben. Durch Drehen des Stellhebels 10 wird der Nocken 18 in der Kulissenscheibe 19 verschoben, sodass der Spannbolzen 9 verschoben wird. Die Halteklammer 5 ist am Fahrzeug mit hier nicht dargestellten Elementen befestigt.

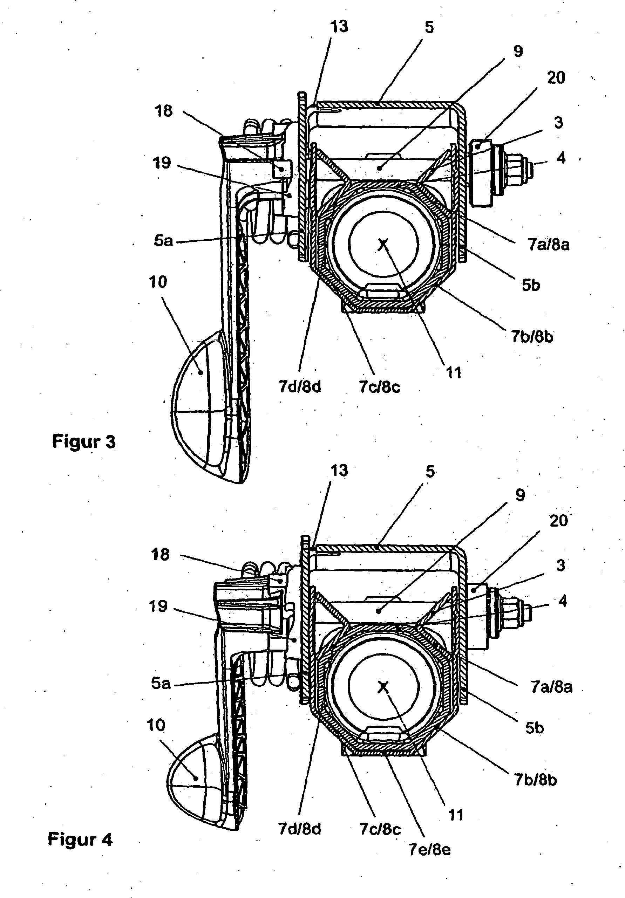

Im Fall, dass das Klemmsystem 6 geöffnet ist (vgl. Fig. 3), werden die Seitenwangen 5a und 5b der Halteklammer 5 entlastet, sodass die ersten und zweiten Flächenabschnitte zwar noch in Kontakt stehen, jedoch mit nur einer geringen Flächenpressung, sodass das Stellteil 4 gegenüber dem Halteteil 3 leicht verschoben werden kann. Gleichzeitig kann die hier gezeigte Lenksäule auch in der Winkellage verschwenkt werden. Dazu sind in den Seitenwangen 5a und 5b Langlöcher 16 und 17 vorgesehen.

Im Fall, dass das Klemmsystem 6 geschlossen ist (vgl. Fig. 4), werden die Seitenwangen 5a und 5b zusammengezogen und klemmen das Halteteil 3 mit den Seitenflächen 3a und 3b fest. Gleichzeitig wird das Halteteil zusammengedrückt, sodass vier Paare von ersten Flächenabschnitten 7a, 7b, 7c, 7d des Halteteils 3 und zweiten Flächenabschnitten 8a, 8b, 8c, 8d des Stellteils 2 zusammengepresst werden.

Alternativ sind das Halteteil 3 und das Stellteil 4 so ausgelegt, dass nur drei Paare von ersten Flächenabschnitten 7a, 7d, 7e des Halteteils 3 und zweiten Flächenabschnitten 8a, 8d, 8e des Stellteils 2 zusammengepresst werden.

Mit der gezeigten Lösung lassen sich problemlos die Verschiebekraft im geöffneten Zustand der Fixiereinrichtung auf 1/15 des Wertes der Verschiebekraft im geschlossenen Zustand der Fixiereinrichtung einstellen und gleichzeitig ein durch zu großes Spiel entstehendes störendes Unsicherheitsgefühl vermeiden.

Damit die Seitenwangen 5a, 5b der Halteklammer 5 leichter zusammengedrückt werden können, ist ein Schlitz 13 vorgesehen.

In der bevorzugten Ausführungsform wird das Halteteil 3 als Blechbiege- und - stanzteil, ggf. mit entsprechenden Prägeoperationen, hergestellt. In der gezeigten Ausführungsform sind die Flächenabschnitte 8a und 8d an zwei separaten Bauteilen ausgebildet, die wie die Seitenwangen 3a und 3b vom Spannbolzen 9 durchsetzt werden. Das Halteteil 3 umschließt dabei das Stellteil 4 nicht vollständig und besitzt an seiner Oberseite eine Öffnung, die sich entlang seiner Längsachse 12 erstreckt.
Bevorzugt fällt die Längsachse 12 des Halteteils 3 mit der Achse 11 der Lenkspindel 2 zusammen.

Ebenso wird das Stellteil 4 und die Halteklammer 5 in einer Blechbiege- und Stanztechnologie hergestellt.

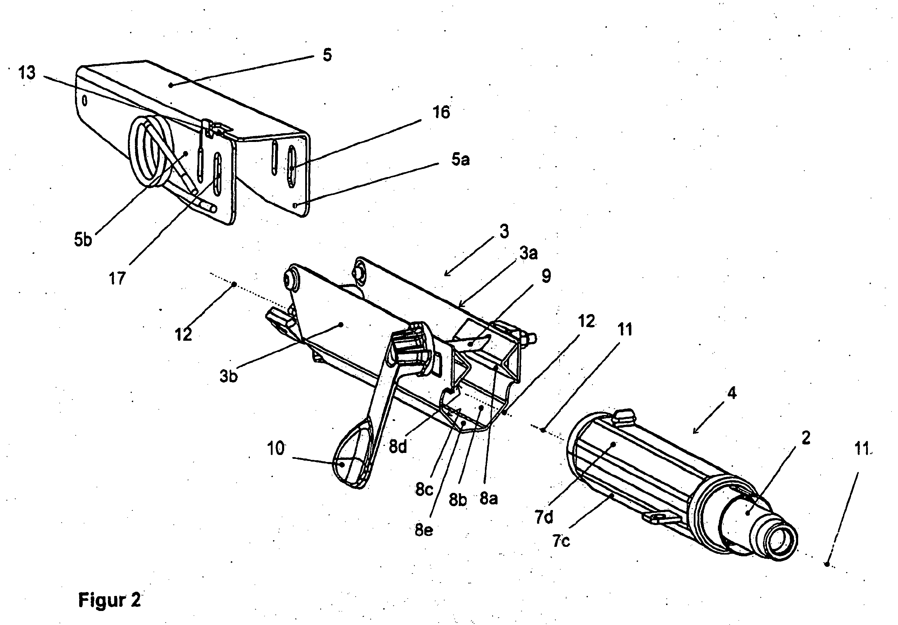

Die Fertigungstoleranzen des Stell- und Halteteils können in einfacher Weise bei der Montage ausgeglichen werden, indem die eingesetzten Ecken, die die Flächenabschnitte 8a und 8d (Fig. 3) tragen, in der Vormontage bei vorbestimmter Einstellung der Fixiereinrichtung mit vorbestimmter Kraft auf die zugeordneten Flächenabschnitte 7a bzw. 7d gepresst werden und dann mit dem Teil des Halteteils, das die übrigen Flächenabschnitte 8c, 8e, 8b trägt, verbunden werden. Die Verbindung erfolgt dann im einfachsten Fall schweißtechnisch. Das Halteteil 3 ist somit aus drei Einzelteilen zusammengesetzt und kann leicht mit dem Stellteil 4 als Baugruppe in die Lenksäule verbaut werden, wie es in der Fig. 2 veranschaulicht ist.

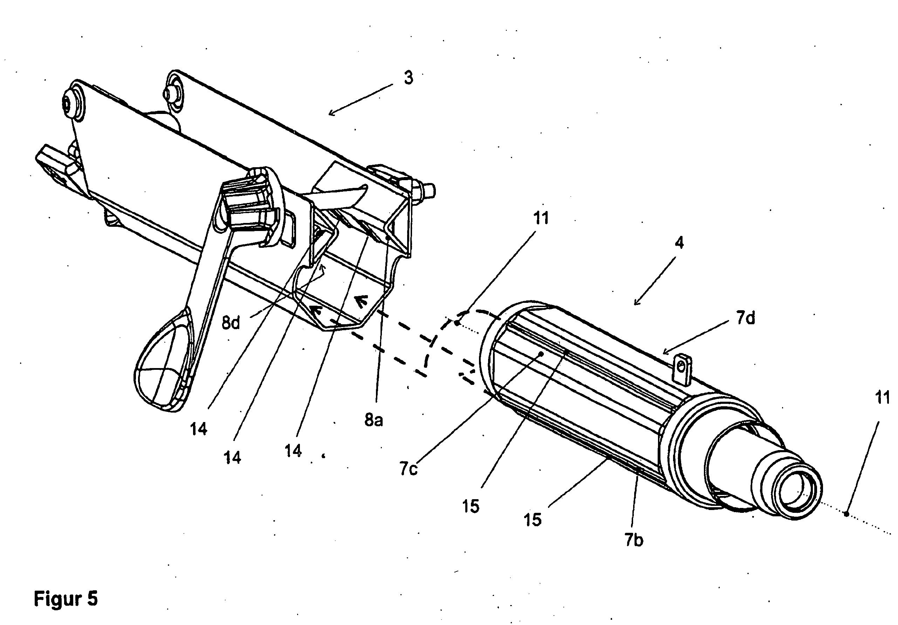

Die Figur 5 zeigt eine alternative Ausführungsform der Lenksäule, bei der auf einigen der Flächenabschnitte leistenartige Erhöhungen ausgebildet sind. Im Beispiel sind auf den Flächenabschnitten 7b und 7c des Stellteils 4 leistenartige Erhöhungen 15, die sich längs der Achse 11 der Lenkspindel 2 erstrecken, ausgebildet. Zur Verdeutlichung wurde das Stellteil 4 in Figur 5 gegenüber der Darstellung in Figur 2 um die Achse 11 der Lenkspindel 2 verdreht dargestellt.
Im Halteteil 3 sind an den Flächenabschnitten 8a und 8d jeweils zwei parallel angeordnete leistenartige Erhöhungen 14 ausgebildet. Diese sind allerdings senkrecht zur Achse 11 der Lenkspindel 2 ausgerichtet.

Zur Montage wird das Stellteil 4 entsprechend der mit den gestrichelten Pfeillinien dargestellten Verdrehung und Verschiebung in das Halteteil 3 positioniert, sodass jeweils eine leistenartige Erhöhung mit einem im Wesentlichen ebenen Flächenabschnitt zusammenwirkt.

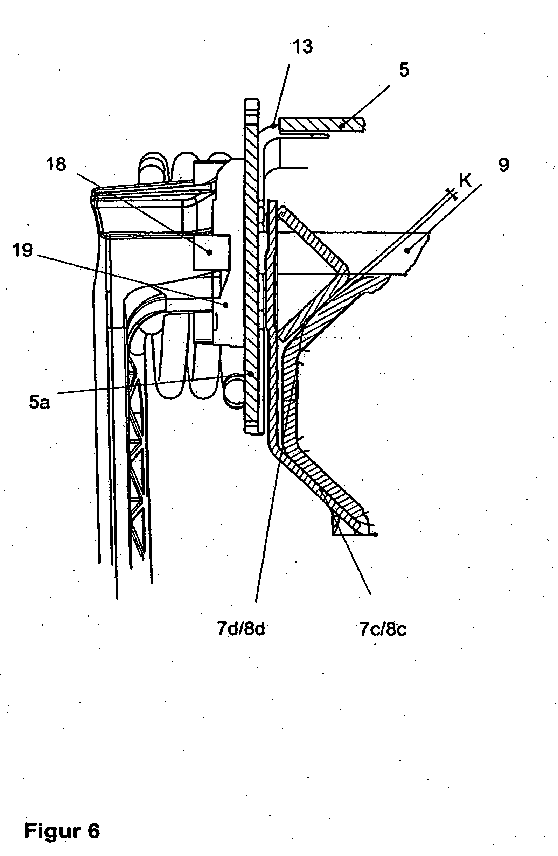

In einer weiteren Ausführung können Flächenabschnitte konvex ausgebildet sein. Ein Beispiel dafür ist in der Figur 6 weit übertrieben dargestellt. Der entsprechende Flächenabschnitt ist mit einer Konvexität K ausgebildet, die beim Schließen der Fixiereinrichtung elastisch eingedrückt wird.

Es ist offensichtlich, dass beliebige Kombinationen von leistenartigen Erhöhungen längs oder/und quer zur Achse 11 der Lenkspindel, eben ausgebildeten Flächenabschnitten, bombierten oder gewölbt ausgebildeten Flächenabschnitten möglich sind und je nach Anwendungsfall eingesetzt werden.

Mit Vorteil wird das Halteteil 3 mit einer Vorspannung in Richtung Lenkspindel 2 über das Stellteil 4 geschoben. Damit ist auch bei geöffneter Fixiereinrichtung 6 eine gute Führung des Stellteils 4 gewährleistet.

Weiter vorteilhaft ist es, die Halteklammer 5 fest und auch im Crashfall unverschiebbar mit dem Fahrzeug zu verbinden, wobei die gesamte Energieabsorption im Crashfall durch die Verschiebung des Stellteils 4 gegenüber dem Halteteil 3 erfolgt.

In den Figuren sind nur Beispiele für eine erfindungsgemäße Lenksäule gezeigt, bei denen der Spannbolzen 9 oberhalb der Lenkspindel 2 angeordnet ist. Diese Anordnung bietet den Vorteil einer kleineren Bauhöhe. Es kann aber für bestimmte Fahrzeuge sinnvoll sein, beispielsweise aus Gründen des Packaging, den Spannbolzen unterhalb der Lenkspindel anzuordnen. Auch für derartige Bauformen ist die Lehre der Erfindung anwendbar.

Es ist nahe liegend, dass alle Ausführungsformen der erfindungsgemäßen Lösung sich mit den bekannten Arten von Fixiereinrichtungen für eine Höhen- und/oder Neigungsverstellung kombinieren lassen. So können ebenso Systeme mit Lamellen oder Verzahnungen zur Lagefixierung verwendet werden. Ebenso können zum Aufbringen der Spannung anstelle der Nocken und Kulissenscheibe beispielsweise Systeme mit Wälzkörpern oder Spindelelementen angewendet werden.

### Liste der Bezeichnungen

- 1: Lenksäule
- 2: Lenkspindel
- 3: Halteteil
- 3a: Seitenfläche
- 3b: Seitenfläche
- 4: Stellteil
- 5: Halteklammer
- 5a: Seitenwange
- 5b: Seitenwange
- 6: Fixiereinrichtung
- 7a: Erster Flächenabschnitt
- 7b: Erster Flächenabschnitt
- 7c: Erster Flächenabschnitt
- 7d: Erster Flächenabschnitt
- 7e: Erster Flächenabschnitt
- 8a: Zweiter Flächenabschnitt
- 8b: Zweiter Flächenabschnitt
- 8c: Zweiter Flächenabschnitt
- 8d: Zweiter Flächenabschnitt
- 8e: Zweiter Flächenabschnitt
- 9: Spannbolzen
- 10: Stellhebel
- 11: Achse Lenkspindel
- 12: Längsachse Halteteil
- 13: Schlitz
- 14: Leistenartige Erhöhung
- 15: Leistenartige Erhöhung
- 16: Langloch
- 17: Langloch
- 18: Nocken
- 19: Kulissenscheibe
- 20: Gegenhalter
- 21: Schwenkachse
- K: Konvexität

## Patentansprüche

1. Verstellbare Lenksäule (1) für ein Kraftfahrzeug, umfassend:
a) eine Lenkspindel (2), die um ihre Achse (11) drehbar in einem Stellteil (4) gelagert ist,
b) eine am Fahrzeug befestigte Halteklammer (5) zum Halten der Lenksäule (1),
c) ein Halteteil (3) und
d) eine Fixiereinrichtung (6), in deren geöffnetem Zustand das Stellteil (4) gegenüber dem Halteteil (3) zur Einstellung der Position der Lenksäule (1) mindestens in Axialrichtung der Lenkspindel (2) verstellbar ist und in deren geschlossenern Zustand das Stellteil (4) von der Fixiereinrichtung (6) gegenüber dem Halteteil (3) festgestellt ist,
e) wobei die von der Lenkspindel (2) weggerichtete Oberfläche des Stellteils (4) in Umfangsrichtung mehrere erste ebene Flächenabschnitte (7a, 7b, 7c, 7d, 7e) aufweist,
f) und die zur Lenkspindel (2) hin gerichtete Oberfläche des Halteteils (3), die das Stellteil (4) zumindest teilweise umschließt, zweite ebene Flächenabschnitte (8a, 8b, 8c, 8d, 8e) aufweist,
g) wobei sich die ersten und zweiten Flächenabschnitte in Richtung der Achse (11) der Lenkspindel (2) erstrecken und wobei zur Fixierung des Stellteils (4) mindestens drei Paare von ersten und zweiten ebenen Flächenabschnitten (7a, 8a, 7b, 8b, 7c, 8c, 7d, 8d, 7e, 8e) zumindest teilweise in kraft- oder kraft- und formschlüssigen Kontakt bringbar sind,
h) und wobei die Halteklammer (5) Seitenwangen (5a, 5b) aufweist, die durch das Schließen der Fixiereinrichtung (6) zusammenziehbar sind und dadurch das Halteteil (3) festklemmbar ist, **dadurch gekennzeichnet,**
i) **dass** die Halteklammer (5) als in einer Blechbiege- und Stanztechnologie hergestelltes einstückiges Bauteil ausgebildet ist und das Halteteil (3) in der Halteklammer (5) um eine Schwenkachse (21) drehbar gelagert ist.

2. Lenksäule nach Anspruch 1, **dadurch gekennzeichnet, dass** die Schwenkachse (21) die Seitenwangen (5a, 5b) durchstößt.

3. Lenksäule nach einem der Ansprüche 1 oder 2, **dadurch gekennzeichnet, dass** in den Seitenwangen (5a, 5b) Langlöcher (16, 17) vorgesehen sind, welche in Längsrichtung der Lenksäule gesehen von der Schwenkachse (21) beabstandet angeordnet sind.

4. Lenksäule nach Anspruch 3, **dadurch gekennzeichnet, dass** die Schwenkachse (21) an dem einen Ende und die Langlöcher (16, 17) an dem anderen Ende der Halteklammer (5) angeordnet sind.

5. Lenksäule nach einem der vorstehenden Ansprüche, **dadurch gekennzeichnet, dass** mindestens einer der ersten und/oder zweiten Flächenabschnitte zur Ausbildung von diskreten Druckpunkten mindestens eine leistenartige Erhöhung (14, 15) aufweist.

6. Lenksäule nach Anspruch 5, dadurch gekenntzeichnet, dass mindestens eine leistenartige Erhöhung (14, 15) in Richtung der Achse der Lenkspindel (11) ausgerichtet ist.

7. Lenksäule für ein Kraftfahrzeug nach Anspruch 5 oder 6, **dadurch gekennzeichnet, dass** mindestens eine leistenartige Erhöhung (14, 15) senkrecht zur Achse der Lenkspindel (11) ausgerichtet ist.

8. Lenksäule für ein Kraftfahrzeug nach einem der vorhergehenden Ansprüche, **dadurch gekennzeichnet, dass** mindestens einer der Flächenabschnitte (7a-7e, 8a-8e) bombiert ist, sodass er eine Konvexität (K) aufweist.

9. Lenksäule nach dem vorhergehenden Anspruch, **dadurch gekennzeichnet, dass** die höchste Stelle der Konvexität (K) einen gedachten ebenen Bezugs-Flächenabschnitt um maximal 0,05 mm überragt.

10. Lenksäule nach einem der vorhergehenden Ansprüche, **dadurch gekennzeichnet, dass** das Halteteil (3) eine Öffnung entlang seiner Längsachse (12) aufweist, die beim Schließen der Fixiereinrichtung verkleinerbar ist, sodass die Flächenabschnitte (7a-7e, 8a-8e) mit einer zur Fixierung des Stellteils (4) erforderlichen Flächenpressung miteinander in Kontakt bringbar sind.

11. Lenksäule nach einem oder mehreren der vorhergehenden Ansprüche, **dadurch gekennzeichnet, dass** genau 4 Paare (7a, 8a, 7b, 8b, 7c, 8c, 7d, 8d) von ersten und zweiten Flächenabschnitten zumindest teilweise in Kontakt bringbar sind.

12. Lenksäule nach einem der vorhergehenden Ansprüche, **dadurch gekennzeichnet, dass** die Halteklammer (5) einen U-förmigen Querschnitt aufweist.

13. Lenksäule nach einem der vorhergehenden Ansprüche, **dadurch gekennzeichnet, dass** in geöffnetem Zustand der Fixiereinrichtung (6) das Halteteil (3) gegenüber der Halteklammer (5) verstellbar und in geschlossenem Zustand der Fixiereinrichtung festgestellt ist.

14. Lenksäule nach den Ansprüchen 10 bis 13, **dadurch gekennzeichnet, dass** das Halteteil (3) von einem Spannbolzen (9) durchsetzt ist, der sich beim Öffnen und Schließen der Fixiereinrichtung (6) in seiner axialen Richtung bewegt und dadurch die Öffnung im Halteteil vergrößert bzw. verkleinert.

15. Lenksäule nach einem der vorhergehenden Ansprüche, **dadurch gekennzeichnet, dass** die Halteklammer (5) von einem Spannbolzen (9) durchsetzt ist

## Claims

1. Adjustable steering column (1) for a motor vehicle, comprising:
a) a steering shaft (2) which is mounted so as to be able to rotate about its axis (11) in an adjusting part (4),
b) a holding clamp (5) which is attached to the vehicle for the purpose of holding the steering column (1),
c) a holding part (3), and
d) a fixing device (6), in the open state of which the adjusting part (4) can be adjusted with respect to the holding part (3) at least in the axial direction of the steering shaft (2) in order to adjust the position of the steering column (1), and in the closed state of the fixing device the adjusting part (4) is fixed with respect to the holding part (3) by means of the fixing device (6),
e) wherein the surface of the adjusting part (4) which is directed away from the steering shaft (2) comprises in the peripheral direction a plurality of first planar surface portions (7a, 7b, 7c, 7d, 7e),
f) and the surface of the holding part (3) which is directed towards the steering shaft (2) and at least partially surrounds the adjusting part (4) comprises second planar surface portions (8a, 8b, 8c, 8d, 8e),
g) wherein the first and second surface portions extend in the direction of the axis (11) of the steering shaft (2) and wherein at least three pairs of first and second planar surface portions (7a, 8a, 7b, 8b, 7c, 8c, 7d, 8d, 7e, 8e) can be brought at least partially into non-positive contact or non-positive and positive contact for the purpose of fixing the adjusting part (4),
h) and wherein the holding clamp (5) comprises side cheeks (5a, 5b) which can be drawn together by closing the fixing device (6) and as a consequence the holding part (3) can be fixedly clamped, **characterised in that**
i) the holding clamp (5) is formed as a single-piece component produced in sheet metal bending and punching technology and the holding part (3) is mounted in the holding clamp (5) so as to be able to rotate about a pivot axis (21).

2. Steering column as claimed in claim 1, **characterised in that** the pivot axis (21) passes through the side cheeks (5a, 5b).

3. Steering column as claimed in any one of claims 1 or 2, **characterised in that** the side cheeks (5a, 5b) are provided with oblong holes (16, 17) which are disposed spaced apart from the pivot axis (21) as seen in the longitudinal direction of the steering column.

4. Steering column as claimed in claim 3, **characterised in that** the pivot axis (21) is disposed at one end of the holding clamp (5) and the oblong holes (16, 17) are disposed at the other end.

5. Steering column as claimed in any one of the preceding claims, **characterised in that** at least one of the first and/or second surface portions comprises at least one strip-like elevation (14, 15) for the purpose of forming discrete pressure points.

6. Steering column as claimed in claim 5, **characterised in that** at least one strip-like elevation (14, 15) is aligned in the direction of the axis of the steering shaft (11).

7. Steering column for a motor vehicle as claimed in claim 5 or 6, **characterised in that** at least one strip-like elevation (14,15) is aligned perpendicularly with respect to the axis of the steering shaft (11).

8. Steering column for a motor vehicle as claimed in any one of the preceding claims, **characterised in that** at least one of the surface portions (7a-7e, 8a-8e) is cambered, so that it comprises a convexity (K).

9. Steering column as claimed in the preceding claim, **characterised in that** the highest point of the convexity (K) protrudes beyond an imaginary planar reference surface portion by a maximum of 0.05 mm.

10. Steering column as claimed in any one of the preceding claims, **characterised in that** the holding part (3) comprises an opening along its longitudinal axis (12) which can be decreased in size as the fixing device is being closed, so that the surface portions (7a-7e, 8a-8e) can be brought into contact with each other by means of a surface pressure required for fixing the adjusting part (4).

11. Steering column as claimed in any one or several of the preceding claims, **characterised in that** precisely 4 pairs (7a, 8a, 7b, 8b, 7c, 8c, 7d, 8d) of first and second surface portions can be brought at least partially into contact.

12. Steering column as claimed in any one of the preceding claims, **characterised in that** the holding clamp (5) comprises a U-shaped cross-section.

13. Steering column as claimed in any one of the preceding claims, **characterised in that** when the fixing device (6) is in the open state, the holding part (3) can be adjusted with respect to the holding clamp (5) and when the fixing device is in the closed state, the holding part (3) is fixed.

14. Steering column as claimed in claims 10 to 13, **characterised in that** the holding part (3) has a pulling bolt (9) passing through it which moves in its axial direction as the fixing device (6) is being opened and closed and as a consequence the opening in the holding part is increased or decreased in size.

15. Steering column as claimed in any one of the preceding claims, **characterised in that** the holding clamp (5) has a pulling bolt (9) passing through it.

## Revendications

1. Colonne de direction (1) pour un véhicule automobile, qui comprend
a) un arbre de direction (2), qui est monte, en rotation autour de son axe (11), dans un organe de réglage (4),
b) un étrier de retenue (5), qui, fixe au véhicule automobile, est destine à maintenir la colonne de direction (1),
c) une pièce de support (3) et
d) un dispositif de fixation (6), dans l'état d'ouverture duquel l'organe de réglage (4) peut être déplace par rapport à la pièce de support (3) pour le réglage de la position de la colonne de direction (1), au moins dans la direction axiale de l'arbre de direction (2), et dans l'état de fermeture duquel l'organe de réglage (4) est bloque par rapport à la pièce de support (3), par le dispositif de fixation (6),
e) la surface de l'organe de réglage (4), orientée à l'oppose de l'arbre de direction (2), présentant, dans la direction périphérique, plusieurs premières sections de surface planes (7a, 7b, 7c, 7d, 7e),
f) et la surface de la pièce de retenue (3), qui, orientée vers l'arbre de direction (2), entoure, au moins partiellement, l'organe de réglage (4), présentant des deuxièmes sections de surface planes (8a, 8b, 8c, 8d, 8e),
g) les premières et les deuxièmes sections de surface s'étendant dans la direction de l'axe (11) de l'arbre de direction (2), et au moins trois paires de premières et de deuxièmes sections de surface planes (7a, 8a, 7b, 8b, 7c, 8c, 7d, 8d, 7e, 8e) pouvant, au moins partiellement, entrer en contact par adhérence ou par adhérence et engagement géométrique, pour la fixation de l'organe de réglage (4),
h) et l'étrier de retenue (5) présentant des joues latérales (5a, 5b) peuvent être rapprochées l'une de l'autre serrées lors de la fermeture du dispositif de fixation (6) et peuvent ainsi serrer la pièce de retenue (3), **caractérisée en ce que**
i) l'étrier de retenue (5) est un élément forme d'une pièce fabriqué dans une technologie de cintrage et d'estampage de la tôle et que la pièce de support (3) est montée en pivotement autour d'un axe de pivotement (21) dans l'étrier de retenue (5).

2. Colonne de direction selon la revendication 1, **caractérisée en ce que** l'axe de pivotement (21) traverse les joues latérales (5a, 5b).

3. Colonne de direction selon l'une des revendications 1 ou 2, **caractérisée en ce que**, dans les joues latérales (5a, 5b), sont prévus des trous oblongs (16, 17), qui, vus dans la direction longitudinale de la colonne de direction, sont disposes à distance de l'axe de pivotement (21).

4. Colonne de direction selon la revendication 3, **caractérisée en ce que** l'axe de pivotement (21) est dispose à l'une des extrémités de l'étrier de retenue (5) et que les trous oblongs (16, 17) sont disposes à l'autre extrémité de celui-ci.

5. Colonne de direction selon l'une des revendications précédentes, **caractérisée en ce qu'**au moins l'une des premières et / ou l'une des deuxièmes sections de surface présentent au moins une saillie en forme de nervure (14, 15) pour la formation de points de pression discrets.

6. Colonne de direction selon la revendication 5, **caractérisée en ce qu'**au moins une élévation en forme de nervure (14,15) est orientée dans la direction de l'axe de l'arbre de direction (11).

7. Colonne de direction selon revendication 5 ou 6, **caractérisée en ce qu'**au moins une élévation en forme de nervure (14, 15) est orientée perpendiculairement à l'axe de l'arbre de direction (11).

8. Colonne de direction l'une des revendications précédentes, **caractérisée en ce qu'**au moins l'une des sections de surface (7a à 7e, 8a à 8e) est bombée de sorte qu'elle forme une convexité (K).

9. Colonne de direction selon l'une des revendications précédentes, **caractérisée en ce que** le point le plus élevé de la convexité (K) dépasse au maximum de 0,05 mm une section de surface de référence plane imaginaire.

10. Colonne de direction selon l'une des revendications précédentes, **caractérisée en ce que** la pièce de support (3) présente, le long de son axe longitudinal (12), une ouverture, qui peut être réduite lors de la fermeture du dispositif de fixation de sorte les sections de surface (7a à 7e, 8a à 8e) puissent être mises en contact les unes avec les autres par une pression en surface, nécessaire pour la fixation de l'élément de réglage (4).

11. Colonne de direction selon l'une ou plusieurs des revendications précédentes, **caractérisée en ce qu'**exactement quatre paires (7a, 8a, 7b, 8b, 7c, 8c, 7d, 8d) de premières et de deuxièmes sections de surface peuvent être mises en contact, au moins partiellement.

12. Colonne de direction selon l'une des revendications précédentes, **caractérisée en ce que** l'étrier de retenue (5) présente une section transversale en U.

13. Colonne de direction selon l'une des revendications précédentes, **caractérisée en ce que** la pièce de support (3) peut être déplacée par rapport à l'étrier de retenue (5) quand le dispositif de fixation (6) est à l'état ouvert, et est fixée quand celui-ci est à l'état ferme.

14. Colonne de direction selon l'une des revendications 10 à 13, **caractérisée en ce que** la pièce de support (3) est traversée par un boulon de serrage (9), qui est déplace dans sa direction axiale, lors de l'ouverture et de la fermeture du dispositif de fixation (6), et qui élargit, respectivement réduit ainsi l'ouverture dans la pièce de support.

15. Colonne de direction selon l'une des revendications précédentes, **caractérisée en ce que** l'étrier de retenue (5) est traverse par un boulon de serrage (9).
